# EUROPEAN PATENT APPLICATION

(11) **EP 0 957 622 A2**
(43) Date of publication of application: **17.11.1999**
(21) Application number: 99303452.9
(22) Date of filing: 04.05.1999
(51) Int. Cl.: H04M 3/50

(54) **apparatus and method for selecting an outgoing greeting message based on call related information**

(30) Priority: 12.05.1998 US 75945
(71) Applicant: LUCENT TECHNOLOGIES INC., Murray Hill, New Jersey 07974-0636 (US)
(72) Inventor: Cannon, Joseph M., Harleyville, Pennsylvania 19438 (US); Johanson, James A., Lehigh, Pennsylvania 18049 (US); Ubowski, Richard M., Harleysville, Pennsylvania 19438 (US)
(74) Representative: Buckley, Christopher Simon Thirsk

(57) **Abstract**

A voice messaging system and method includes a voice recorder (20) to store a plurality of outgoing greeting messages, each of the outgoing greeting messages being associated with a respective pre-stored call related information entry in a directory (16). A receiver (12) receives call related information associated with an incoming call. A processor (18) compares the received call related information with the pre-stored call related information to select one of the plurality of outgoing greeting messages such that a personalized outgoing greeting message or a default outgoing greeting message may be selected and played based on call related information (e.g., Caller ID information received with respect to the calling party).

## Description

### Field of the Invention

This invention relates generally to a voice messaging system and more particularly, to a voice messaging system which selects, for a particular incoming call, a particular outgoing greeting message (OGM) or announcement from a plurality of outgoing greeting messages based on incoming call related information.

### Background of Related Art

Voice messaging systems have become an essential part of our society. For instance, voice mail type systems installed with private branch exchanges (PBXs) are found in most businesses, while home usage of telephone answering devices is ever-increasing.

Conventional voice messaging machines are capable of receiving call related information, e.g., Caller ID information associated with an incoming call. Using Caller ID, a caller's telephone number and/or household name is transmitted by the telephone company to the voice messaging machine. Using Type I service, Caller ID information is transmitted during the silent interval between the first two rings to a telephone in an on-hook condition. Type II customer premises equipment (CPE) receives Caller ID information in an off-hook condition, e.g., Caller ID Call Waiting (CIDCW). Of course, other standards exist, e.g., in the United Kingdom a standard exists wherein the call related information is transmitted prior to the first ring, all of which are applicable to the present invention.

When an incoming call is answered by the voice messaging system, a pre-recorded outgoing greeting message is played. If the caller leaves a voice message, the voice message and call related information, e.g., Caller ID information associated therewith, may be stored in the voice messaging system. Thereafter, the user retrieves the stored voice messages during playback of the voice message.

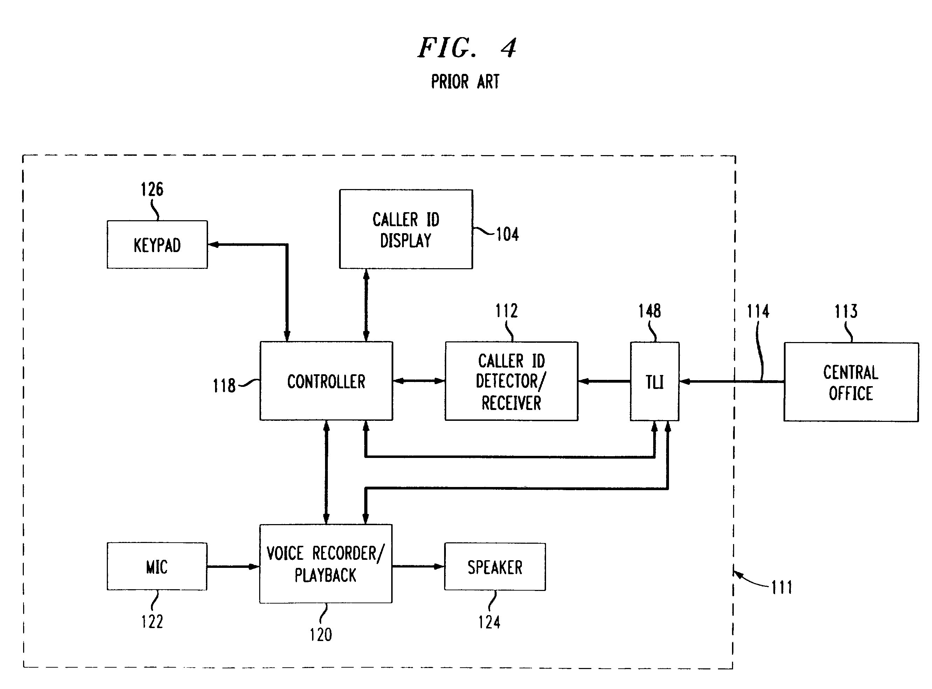

One conventional Type I/Type II customer premises equipment including the capability to receive call related information, e.g., Caller ID information is shown in **FIG. 4.**

In particular, customer premises equipment **111** such as a telephone answering device (TAD) includes a caller **ID** detector/receiver **112** adapted to receive a telephone number or other call related information about a calling party from the central office **113** over the telephone line **114** via telephone line interface **148**. For Type I functionality, when the TAD **111** is on-hook, the telephone number or other call related information (e.g., Caller ID information) about the calling party is received by the caller ID detector/receiver **112,** e.g., during the silent interval between the first and second rings, or before the first ring as in the United Kingdom. For Type II functionality, i.e., while in a call waiting mode (off-hook), call related information follows a caller ID alerting signal sequence (CAS tones) or other type of dual-tone or single tone alerting signal sequence.

Controller **118** is a processor, e.g., a microprocessor, a digital signal processor, or a microcontroller.

The telephone number and/or the calling party's household name associated with that telephone number are displayed on a display device **104.** The TAD **111** further includes a voice recorder/playback circuit **120** having a standard microphone **122** and speaker **124** electrically connected thereto. An alpha-numeric keypad **126 is** also provided to provide control dual tone multi frequency (DTMF) control signal to the controller **118** and local operation of the system.

Conventional voice messaging systems for home use permit the user to record and program one outgoing greeting message to be played at any one time after the TAD **111** receives a predetermined number of rings. Typical voice messaging systems for office use, such as private branch exchanges (PBXs), allow the user to choose only one outgoing greeting message or announcement for playback in response to an outside call. Some voice messaging systems allow the user to record a second, more personal outgoing greeting message for use when the user indicates use of the alternative, second outgoing message.

Conventional voice messaging systems provide the same outgoing greeting message (OGM) or announcement to all callers, without concern about who the caller is. This proves to be disadvantageous in certain situations. For instance, the user may want to appear to be away from the home for some callers, and to be simply unavailable to other callers, etc.

### Summary Of The Invention

In accordance with the principles of the present invention, a voice messaging system and method includes a voice recorder to store a plurality of outgoing greeting messages. Each of the outgoing greeting messages is associated with respective pre-stored call related information. A receiver receives call related information associated with an incoming call. A processor compares the received call related information with the pre-stored call related information to identify one of the plurality of outgoing greeting messages such that a personalized outgoing greeting message may be selected and played based on call related information received with respect to the calling party.

### Brief Description Of The Drawings

Features and advantages of the present invention will become apparent to those skilled in the art from the following description with reference to the drawings, in which:
**FIG. 1** is a block diagram illustrating a TAD provided in accordance with the principles of the present invention;
**FIG. 2** is a physical view of a TAD in conformance with the principles of the present invention;
**FIG. 3** is a more detailed block diagram of one embodiment of the TAD shown in **FIG. 1;** and
**FIG. 4** is a block diagram of a conventional TAD.

### Detailed Description Of Illustrative Embodiments

The present invention relates to a voice messaging system such as a telephone answering device or voice mail system which selects an outgoing greeting message or announcement based on call related information associated with an incoming call. The embodiment described is a telephone answering device, but the principles disclosed are equally applicable to voice messaging systems in general.

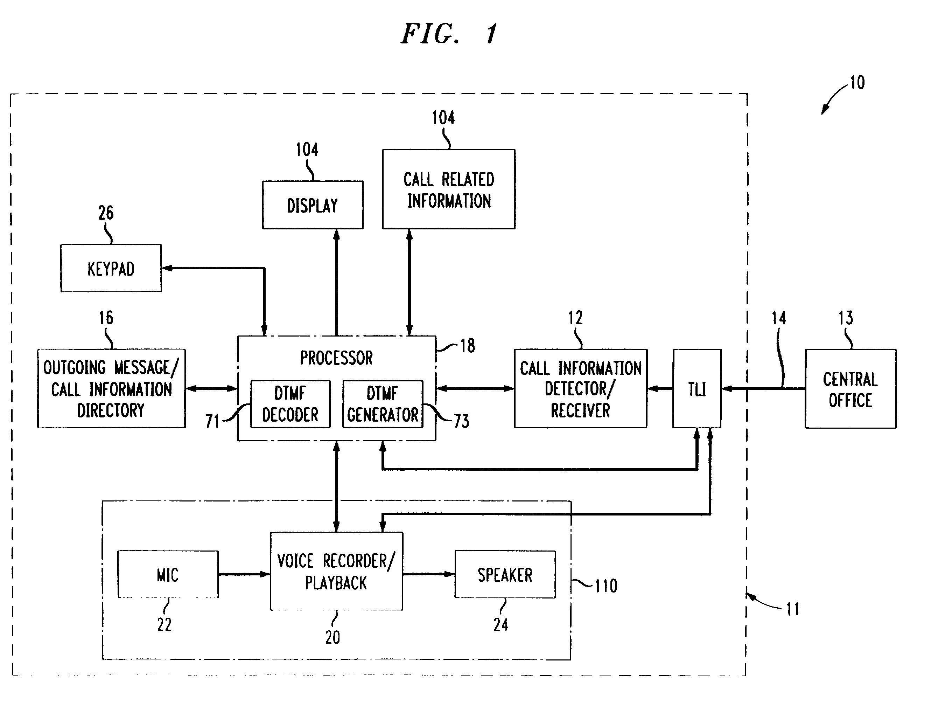

With reference to **FIG. 1,** a telephone answering system, generally indicated at **10,** includes a telephone answering device (TAD) **11** having a call information detector/receiver circuit **12**. The call information detector/receiver receives call related information from a central office **13** over a telephone line **14** via telephone line interface (TLI) **48.**

The TAD **11** includes a voice module **110,** including the voice recorder/playback circuit **20,** a microphone **22** and a speaker **24** in communication with the controller **18.** The function of the voice recorder/playback circuit **20** is to record incoming voice messages and to playback recorded voice messages from voice memory. A suitable voice recorder/playback circuit **20** is disclosed in U.S. Patent No. 5,524,140, the content of which is hereby explicitly incorporated into the present specification by reference.

Call related information, e.g., Caller ID information such as a telephone number and/or the household name of the calling party is transmitted to the TAD **11,** e.g., between the first and second rings of an incoming call from the calling party, or before first ring, or contained within Caller ID/Call Waiting (CIDCW) information. The call related information is generally stored in a centralized database at the telephone company central office **13** which provides the call related information service, e.g., Caller ID service. Call related information stored at the central office **13** is transmitted to the TAD **11,** received by the call information detector/receiver **12,** and provided to a controller **18.**

The controller **18** is any appropriate processor, e.g., a microprocessor, a digital signal processor, or a microcontroller.

The processor **18** includes a dual tone multi frequency (DTMF) decoder **71** and a DTMF generator **73** to, e.g., detect and generate control signal relating to an incoming call. Alternatively, the voice module **110** may include software modules which perform DTMF detection and decoding.

The TAD **11** further includes a voice recorder/playback circuit **110.** The processor **18** controls the functioning of the voice recorder/playback circuit **110** such as PLAY, RECORD, ERASE and STOP signals.

The received call related information such as, for example, a telephone number, area code, household name, time of call, private "P", out of area "O", and/or anonymous "A" information associated with the incoming call is compared by the processor **18** with pre-stored call related information contained in an outgoing message/call information directory **16** to identify a pre-selected outgoing greeting message from among a plurality of possible outgoing greeting messages.

The outgoing message/caller information directory **16** is stored in memory such as Flash memory at the TAD **11.**

Each of the plurality of outgoing greeting messages is associated with respective call related information pre-stored in the outgoing message/call information directory **16.** One of the possible outgoing greeting messages is designated as a default OGM, to be played for incoming calls which do not match an entry in the outgoing message/call information directory **16.** A user can pre-select an outgoing greeting message to be used for a particular caller by recording a plurality of outgoing greeting messages and by entering call related information such as at least a portion of a telephone number and/or at least a portion of a household name via keypad **26** for those callers to be presented with that particular outgoing greeting message. This. process may be repeated for as many outgoing greeting messages to be as desired, within the limits of the memory accessible by the TAD **11.**

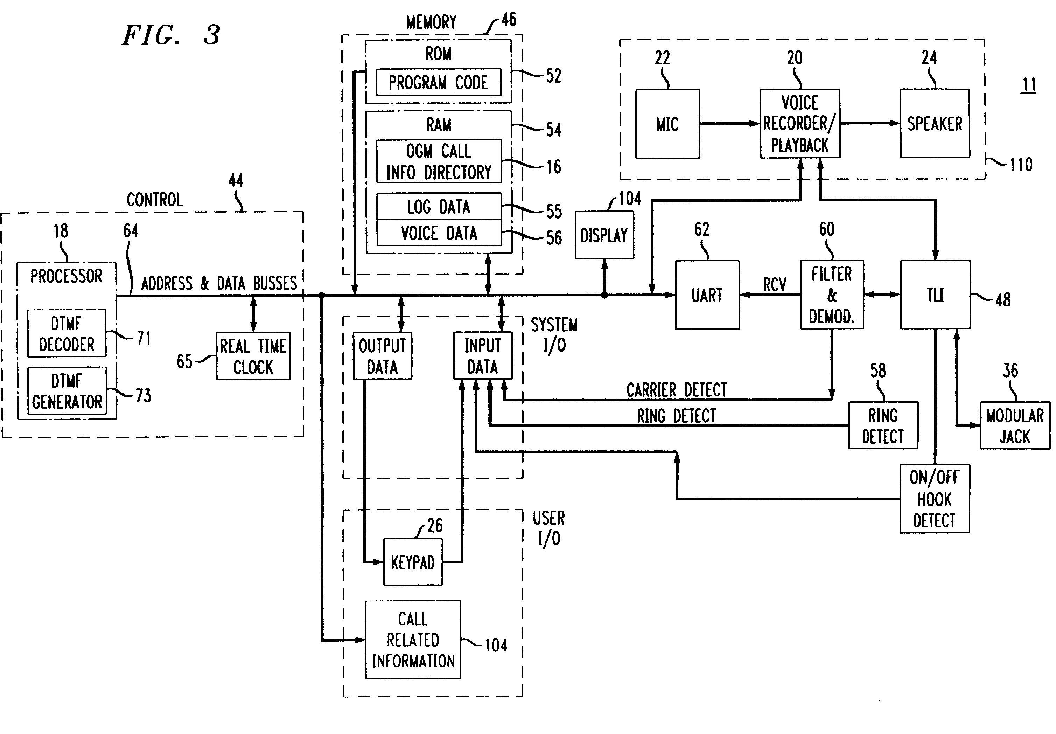

When incoming call related information relating to a calling party matches call information in an entry in the outgoing message/call information directory **16,** a particular one of the plurality of outgoing greeting messages is designated by the entry to be played for that caller. The processor **18** causes a voice recorder/playback circuit **20 (FIG. 3)** to play the selected outgoing greeting message to the caller. In response to the particularly selected outgoing greeting message, the caller may then leave a voice message or may simply hang-up.

The TAD **11** may play back a 'canned' outgoing message based on received call related information. For instance, an individual may desire to play back a pre-recorded, stern sounding message to strangers while playing a personalized message to recognized callers as determined based on the received call related information.

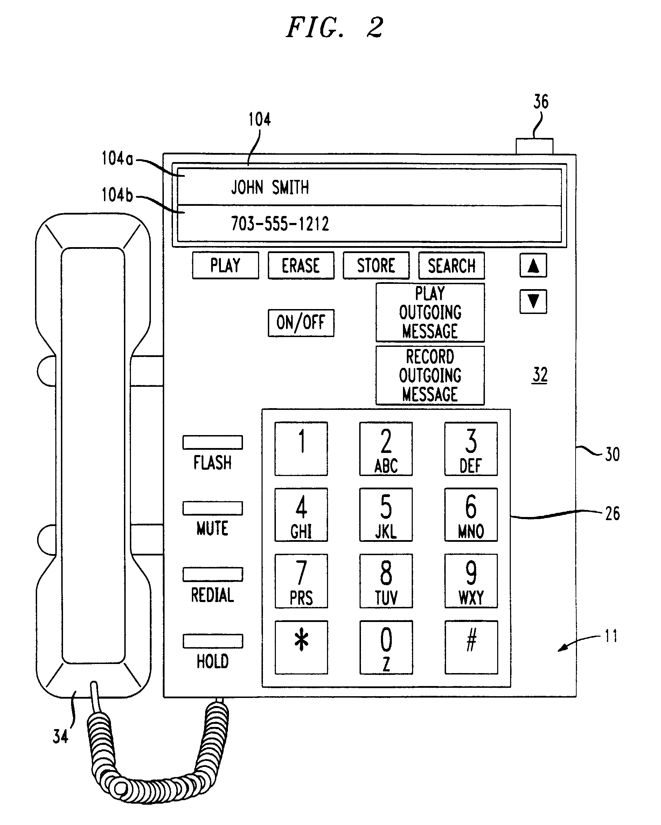

**FIG. 2** shows the physical packaging of a TAD **11** in accordance with the principles of the present invention. In particular, the TAD **11** may be packaged to fit within a console **30** which includes a control panel **32.** The console **30** may be equipped with a standard handset **34** and a phone jack **36** which can be plugged into any standard telephone company modular jack, e.g., an RJ-11 jack. The control panel **32** includes a liquid crystal display (LCD) **104** and the alpha-numeric keypad **26.** The LCD **104** displays call related information regarding incoming calls, e.g., the telephone number and/or the household name associated with the incoming call. If there is no call related information relating to a particular incoming call, the LCD **104** is left blank or otherwise indicates that call related information is not available for that particular call. Moreover, the display **104** is used to scroll through a log of call related information.

**FIG. 3** shows a more detailed block diagram of an embodiment of a TAD **11** in accordance with the principles of the present invention.

In particular, the TAD **11** includes a control circuit **44,** memory **46,** the telephone line interface (TLI) **48,** display **104** and voice module **110** as shown and described with respect to **FIGS. 1 and 2.**

Control circuit **44** includes the processor **18** which controls the TAD **11** by executing instructions that are stored in program code in ROM **52.** Random access memory (RAM) **54** is also provided for general use and to store log and priority data **55** and voice message data **56.** The RAM **54** includes voice memory such as Flash memory for storing the plurality of outgoing greeting messages and received voice messages. A real time clock circuit 65 provides the TAD **11** with the current time and date.

The telephone line interface **48** includes circuitry which permits the TAD **11** to be connected directly to a standard telephone module jack, i.e., an RJ-11 jack. The telephone line interface **48** also includes various control and monitoring circuits that are common to ordinary telephones. These circuits are conventional and may include an electronic telephone circuit (not shown) for controlling dialing functions and for interfacing a telephone handset. A ring detect circuit **58** detects the ring signal of an incoming call and an on/off hook detect circuit **70** are also provided. In the illustrated embodiment, the TAD **11** includes a filter and demodulating circuit **60** that is used for demodulating an incoming serial data stream relating to call related information. Data received by the filter and demodulating circuit **60** includes at least data representing the telephone number of an incoming call. Data relating to a household name associated with the telephone number of the incoming call may also be received by the filter and demodulating circuit **60.** One protocol for the otherwise conventional portions of the circuit shown in **FIG. 3** is described in U.S. Patent No. 4,582,956, the disclosure of which is hereby explicitly incorporated herein by reference into the present specification.

Frequency shift keying, phase shift keying, quadrature amplitude modulation or any other suitable modulation technique may be used for transmitting a serial data stream to the TAD **11.** A universal asynchronous receiver/transmitter (UART) **62** is used to convert the demodulated serial data received from the filter and demodulating circuit **60** to a parallel format read by the processor **18** via address and data busses **64.** Alternatively, the processor 18 can perform the UART function.

When a caller initiates a call to the TAD **11,** the ring interface circuit **58** provides a signal indicative of the incoming ring signal to the processor **18.** Call related information is transmitted by the central office **13** to the TAD **11** during the silent period between the first and second rings, is displayed on display **104.** In accordance with the invention, the incoming call related information is received by the call information detector/receiver **12** and is compared with call information in the outgoing message/call information directory **16** by the processor **18** to determine a match for selecting a particular outgoing greeting message to be played in response to the incoming call. The information in the disclosed embodiment is compared whether or not the TAD **11** answers the incoming call. However, the invention is equally applicable if the incoming call information is not compared until after the TAD **11** answers the incoming call.

If there is a match and the TAD **11** answers the incoming call, e.g., after a predetermined number of rings, the processor **18** causes an off-hook condition and then causes the voice/recorder playback circuit **20** to transmit or play the selected outgoing greeting message through the telephone line interface circuit **48** and to the telephone line **14.** If there is no match of the incoming call related information with pre-stored call related information in the outgoing message/caller information directory **16,** a pre-recorded, default outgoing greeting message is transmitted to the calling party via the telephone line **14.**

In response to the selected outgoing greeting message, if the TAD **11** is in a normal receive call mode the caller may record a voice message. The voice message is digitized, compressed and stored in the voice memory section **56** of RAM **54.** It can be appreciated that while the present invention relates to digital TAD, other storage devices such as cassette tapes are also possible.

The controller or processor **18** can distinguish three states during a call: voice signals, DTMF signals, and dial tone or silence, by reading the level and modulation of the signals on the telephone line **14.** The voice recorder/playback circuit **20** can distinguish between the tones of DTMF signals and the signal level ranges associated with human speech detected on the telephone line **14.** If voice signals are detected, the processor **18** immediately executes a voice record routine. If no voice is present on the telephone line **14,** but DTMF signals are being transmitted, the processor **18** executes a DTMF decode routine. If there is a dial tone or silence on the telephone line **14** for a predetermined period of time, e.g., five seconds, the processor **18** causes the on/off hook detect circuit **70** to go "on-hook", terminating the call.

An interesting mode develops with, e.g., a local voice messaging system together with voice mail service maintained at the central office. In this case, if the line associated with the voice messaging system is busy, the system may be set to selectively play a special outgoing message from the voice mailbox based on the incoming call related information.

Another interesting feature can be implemented wherein if the calling party hangs up after the call related information is received but before a complete voice message is recorded, the voice messaging system can call that user and play back a special message or announcement such as "Sorry I was busy when you called. Can you give me another chance and leave a message after the beep?" based on that call related information.

While the disclosed embodiments describe the reception of caller ID information, the invention relates to the reception and processing of any call related information.

A voice messaging system in accordance with the principles of the present invention provides an effective way of personalizing outgoing greeting messages based on call related information. Thus, a user of the voice messaging system of the invention may provide professional greetings for general incoming business calls, and friendly or humorous greetings for calls from family and friends.

While the invention has been described with reference to the exemplary embodiments thereof, those skilled in the art will be able to make various modifications to the described embodiments of the invention without departing from the true spirit and scope of the invention.

## Claims

1. A message module comprising:
a plurality of pre-stored messages, at least one of said plurality of messages being associated with respective pre-stored call related information;
a processor to compare received call related information with said pre-stored call related information to select one of said plurality of messages; and
a device to transmit said selected message.

2. The message module according to claim 1, wherein:
said plurality of pre-stored messages include outgoing greeting messages.

3. The message module according to daim 1, wherein:
said plurality of pre-stored messages include announcement messages.

4. The message module according to claim 1, wherein:
said pre-stored call related information is a telephone number.

5. The message module according to claim 1, wherein:
said pre-stored call related information is a household name.

6. A method of selecting a message, the method comprising:
storing a plurality of messages, at least one of said plurality of stored messages being associated with pre-stored call related information;
receiving call related information with respect to an incoming call; and
comparing said received call related information with said pre-stored call related information to select one of said plurality of messages.

7. The method of selecting a message according to claim 6, wherein:
said call related information and said pre-stored call related information are each a telephone number.

8. The method of selecting a message according to claim 6, wherein:
said call related information and said pre-stored call information are each a household name.

9. The method of selecting a message according to claim 6, wherein:
said call related information and said pre-stored call related information are each at least a portion of a telephone number.

10. The method of selecting a message according to claim 9, wherein:
said at least a portion of said telephone number is an area code.

11. The method of selecting a message according to claim 7, wherein:
said call related information and said pre-stored related information are each an indication of at least one of whether the incoming call is private, out of area, and anonymous.

12. The method of selecting a message according to claim 6, wherein:
said plurality of messages include outgoing greeting messages.

13. The method of selecting a message according to claim 6, wherein:
said plurality of messages include announcement messages

14. A method of selecting a message from a plurality of messages using a voice messaging system capable of receiving call related information with respect to an incoming call, the method comprising:
providing a plurality of pre-stored messages, at least one of said plurality of pre-stored messages being associated with respective pre-stored call related information; and
comparing received call related information with respect to said incoming call with said pre-stored call related information to select one of said plurality of pre-stored messages.

15. The method according to claim 14, further comprising:
transmitting said selected message to said incoming call.

16. The method according to claim 14, wherein:
said received call related information and said pre-stored call related information are each a telephone number.

17. The method according to claim 14, wherein:
said received call related information and said pre-stored call related information are each a household name.

18. A message module comprising:
storing means for storing a plurality of messages and for storing call related information associated with at least one of said plurality of messages;
receiving means for receiving call related information with respect to an incoming call; and
comparing means for comparing said received call related information with said pre-stored call related information to select one of said plurality of messages.

19. The message module according to claim 18, wherein:
said call related information associated with each of said plurality of messages is respective telephone numbers.

20. The message module according to claim 18, wherein:
said call related information associated with each of said plurality of messages is respective household names.

21. The message module according to claim 18, wherein:
said comparing means is a processor.

22. The message module according to claim 18, further comprising:
a display to display said call related information.

23. The message module according to claim 18, wherein:
said call related information associated with each of said plurality of messages is an indication of at least one of whether the incoming call is private, out of area, and anonymous.

24. The message module according to claim 18, wherein:
said plurality of messages include outgoing greeting messages.

25. The message module according to claim 18, wherein:
said plurality of messages include announcement messages.
